# EUROPÄISCHE PATENTSCHRIFT

(11) **EP 2 807 383 B1**
(45) Veröffentlichungstag und Bekanntmachung des Hinweises auf die Patenterteilung: **10.06.2020**
(21) Anmeldenummer: 13701394.2
(22) Anmeldetag: 14.01.2013
(51) Int. Cl.: F16B 21/04, B60S 1/04

(54) **BEFESTIGUNGSSYSTEM**
FIXING SYSTEM
SYSTÈME DE FIXATION

(30) Priorität: 25.01.2012 DE 102012001457
(43) Veröffentlichungstag der Anmeldung: 03.12.2014
(73) Patentinhaber: Volkswagen Aktiengesellschaft, 38440 Wolfsburg (DE)
(72) Erfinder: JUNGGEBAUER, Jens, 38104 Braunschweig (DE)
(86) Internationale Anmeldenummer: PCT/EP2013/050556
(87) Internationale Veröffentlichungsnummer: WO 2013/110520

(56) Entgegenhaltungen:
- WO-A1-03/051690
- DE-A1-102005 046 631
- DE-A1-102008 014 043
- DE-A1-102009 003 067

## Beschreibung

Die Erfindung betrifft eine Anordnung umfassend ein mit einem Haltefuß versehenes Bauteil, insbesondere einen Scheibenwischermotor oder Schiebedachmotor oder Scheibenhebermotor, sowie ein Befestigungssystem mit einem Befestigungselement zur elastischen Anbindung des Bauteils an einem plattenförmigen Trägerteil, insbesondere an einem Karosserieblech eines Kraftfahrzeugs, nach dem Oberbegriff des Anspruchs 1.

Eine bekannte gattungsgemäße Anordnung (WO 03/051690 A1) umfasst ein Befestigungssystem zur elastischen Anbindung eines Bauteils, hier eines Scheibenwischermotors, an einem plattenförmigen Trägerteil, insbesondere an einem Karosserieblech eines Kraftfahrzeugs. Dazu ist ein Befestigungselement vorgesehen mit einem mittleren, schaftförmigen Verbindungsbereich, an den sich einerseits ein Stützteller mit einem Drehgriff oder Werkzeugansatz und andererseits ein Nockenelement anschließt, wobei den Verbindungsbereich eine Elastomerhülse umgibt, die eine außen umlaufende Haltenut aufweist. In diese Haltenut greift ein ringförmig geschlossener Haltefuß des Bauteils ein. Im montierten Zustand ist das Nockenelement durch ein Formloch in der Art eines Schlüssellochs im Trägerteil gesteckt, dergestalt, dass das Befestigungselement beziehungsweise das Nockenelement für eine Rastverbindung im Formloch verdreht ist und sich das Nockenelement von der Rückseite her am Wandbereich des Trägerteils abstützt, wobei die Elastomerhülse zwischen dem Stützteller und dem Trägerteil zusammengepresst und damit elastisch vorgespannt ist.

Der ringförmig geschlossene Haltefuß erfordert hier entweder eine zweiteilige, an der Haltenut getrennte Elastomerhülse oder eine einteilige Elastomerhülse muss in den ringförmig geschlossenen Haltefuß eingeknüpft werden. Beide Möglichkeiten sind montagetechnisch aufwändig und kostenintensiv.

Zudem ist zur Herstellung einer verdrehgesicherten Rastverbindung im Bereich des Formlochs und des Nockenelements eine relativ komplizierte Rastkontur erforderlich, welche hier im Wesentlichen durch Formgebungen am Trägerteil im Bereich um das Formloch hergestellt ist. Dies erfordert am Trägerbauteil, insbesondere an einem Karosserieblech eines Kraftfahrzeugs, zusätzlich zur Herstellung des Formlochs weitere aufwändige Verformungs-Bearbeitungsschritte, wodurch die Bearbeitungskosten am Trägerbauteil relativ hoch sind.

Eine weitere bekannte Anordnung mit einem Befestigungssystem für eine Scheibenwischeranlage (DE 198 17 289 A1) ist weitgehend ähnlich aufgebaut, wobei auch hier die Rastkontur am Trägerteil im Bereich des Formlochs beziehungsweise an einem Karosserieblech geformt ist.

Aus der DE 10 2008 014 043 A1 ist eine Wischermotorbefestigungseinrichtung und ein Verfahren zum Befestigen eines Wischermotors bekannt. Bei dieser Wischermotorbefestigungseinrichtung ist der Wischermotor über einen Spreizniet an einer Haltestruktur befestigt.

Aufgabe der Erfindung ist es, eine gattungsgemäße Anordnung so weiterzubilden, dass die Anbringung des Haltefußes an der Elastomerhülse einfacher und kostengünstiger durchzuführen ist. Eine weitere Aufgabe besteht darin, die Ausbildung der Rastverbindung kostengünstiger zu gestalten.

Dazu wird der in die Haltenut der Elastomerhülse eingreifende Bereich des Haltefußes nicht geschlossen ringförmig, sondern als Haltefuß-Steckteil ausgebildet mit einer C-förmig teilweise offenen, dem Innendurchmesser der Haltenut angepassten Ringform. Durch die damit geschaffene Aufsteckmöglichkeit des Haltefußes seitlich auf die Elastomerhülse in die dortige Haltenut kann die Elastomerhülse jedenfalls einteilig und im Bereich der Haltenut zusammenhängend geformt sein. Durch die seitliche Aufsteckmöglichkeit entfällt bei der solchen einteiligen Elastomerhülse ein aufwändiger Einknüpfvorgang, wie er bei einem ringförmig geschlossenen Haltefuß nötig ist. Damit wird insgesamt die Montage erleichtert und die Montagezeit wird vorteilhaft verringert.

Eine elastische Anbindung des Bauteils am Trägerteil mit einer Kombination aus Kraftschluss und Formschluss für eine stabile abzugssichere Halterung des Haltefuß-Steckteils wird insbesondere dadurch erhalten, dass die in die Haltenut eingreifende Materialstärke des Haltefuß-Steckteils auf die Nutweite der Haltenut so abgestimmt ist, dass im montierten Zustand, bei elastisch vorgespannter Elastomerhülse, das Haltefuß-Steckteil elastisch eingespannt in der Haltenut aufgenommen und gehalten ist. Dies erfolgt im Wesentlichen dadurch, dass bei einem Einpressen und Vorspannen der Elastomerhülse auch die Nutweite der Haltenut reduziert wird beziehungsweise das darin aufgenommene Haltefuß-Steckteil eingeklemmt wird. Durch die C-Form des Haltefuß-Steckteils in Verbindung mit der großen Reibung zwischen den Wänden der Haltenut und dem Haltefuß-Steckteil wird die stabile abzugssichere Halterung erreicht.

Erfindungsgemäß ist am Nockenelement wenigstens ein Nocken geformt, wobei nach einer Verdrehung eine formschlüssige Durchsteckverbindung mit einem das Formloch umgebenden Trägerwandbereich gebildet wird. Zudem ist am Nockenelement eine Rastkontur mit wenigstens einer Gleitschräge ausgebildet, dergestalt dass bei einer Verdrehung das Nockenelement durch schräges Aufgleiten weiter in das Formloch hineingezogen wird und damit durch eine Längenverkürzung zwischen Stützteller und dem Trägerteil weiter Vorspannung in der dortigen Elastomerhülse senkrecht zum Trägerteil aufgebaut wird. Weiter soll die Rastkontur wenigstens einen Drehanschlag aufweisen, der in der Verdrehendstellung nach Überwindung der Gleitschräge für eine rotationssichere Verrastung im Formloch eingreift.

Damit wird vorgeschlagen, die Nockenform in Verbindung mit der relativ komplizierten Rastkontur am Nockenelement und nicht am Trägerbauteil auszubilden. Bei der Herstellung des Befestigungselements ist das Nockenelement mit seinen Nockenformen zusammen mit der Rastkontur insbesondere bei einem Spritzgussverfahren einfach und kostengünstig herstellbar. Die Erzeugung der komplizierten Rastkontur erfolgt somit quasi zusatzkostenfrei beim Spritzgießen. Am Trägerteil, beispielsweise einem Karosserieblech, ist dabei nur ein einfaches Formloch insbesondere als Stanzloch ohne zusätzliche Verformungs-Bearbeitungsschritte erforderlich, was die Kosten für das Trägerteil reduziert.

Für eine rotationssichere Verrastung wird weiter konkret vorgeschlagen, dass die Rastkontur sowohl einen Eindrehanschlag als auch einen Rückdrehanschlag aufweist, wobei der Rückdrehanschlag durch einen Rücksprung am Ende der Gleitschräge gebildet ist und in seiner Anschlagposition durch die axiale Federkraft der vorgespannten Elastomerhülse gehalten ist.

Im Weiteren wird eine konkretisierte Ausführungsform mit einem Formloch mit wenigstens einem, vorzugsweise mit vier Nockenöffnungen beschrieben. Der Schutzumfang soll sich dabei auch auf alternative Formlochgestalten erstrecken, beispielsweise mit zwei oder fünf Nockenöffnungen, sofern das angegebene Wirkprinzip der Anbindung mit den Nocken, den Gleitschrägen, den Drehanschlägen und Stützlaschen verwendet ist. Bei der Ausführung mit vier Nockenöffnungen weist das Formloch am Trägerteil einen zentralen Öffnungsbereich mit einem Kerndurchmesser auf, von dem die vier Nockenöffnungen seitlich abragen, von denen jeweils zwei spiegelbildlich gegenüberliegen und durch vier dazwischenliegende Stützlaschen getrennt sind. Durch die vier Nockenöffnungen sind vier entsprechend gestaltete, am Nockenelement abragende Nocken durchsteckbar. An den Nocken-Oberseiten erstreckt sich jeweils ein radial nach innen weisender Drehschlitz mit etwas größerer Schlitzbreite als die Materialstärke des Trägerteils. Dadurch kann das Nockenelement mit seinen Nocken unter dem Trägerteil aus der Formlochübereinstimmung so verdreht werden, dass die Drehschlitze beziehungsweise die zugeordneten Nocken nach einer Verdrehung des Befestigungselements im Bereich der Stützlaschen liegen, wobei diese zur Abstützung gegen ein Abheben des Befestigungselements von den Nocken hintergriffen werden. Die Nockenöffnungen können so dimensioniert sein, dass nur eine Montage des zugeordneten Nockens erfolgen kann, zum Beispiel paarweise gegenüberliegend.

In einer weiteren Ausgestaltung liegt in der Eindrehrichtung der Verdrehschlitze jeweils eine ansteigende Gleitschräge für eine zunehmende Vorspannung der Elastomerhülse beim Eindrehen des Befestigungselements. In Verbindung mit dem Drehschlitz und der ansteigenden Gleitschräge ist nach dieser wenigstens ein Drehanschlag vorgesehen, der die Verdrehung in Eindrehrichtung begrenzt und der sich in der Drehendstellung seitlich an einer Stützlasche abstützt. Damit ist eine rotationssichere Abstützung in Eindrehrichtung gewährleistet.

Weiter ist ein Drehschlitz in der Eindrehrichtung durch einen Rückdrehanschlag begrenzt, der ebenfalls in der Drehendstellung wirksam wird. Der Rückdrehanschlag ist dabei durch einen stufenförmigen, in Einsteckrichtung ausgebildeten Rücksprung gebildet, dergestalt dass die Stufenwange durch die Federkraft der vorgespannten Elastomerhülse in der Drehendstellung in eine Nockenöffnung gezogen wird und seitlich zur Rückdrehabstützung an einer Stützlasche anliegt. Damit ist die Anbindung auch in Rückdrehrichtung rotationssicher gehalten. Eine Lösung der Verbindung ist ersichtlich nur möglich, wenn auf das Befestigungselement in Einsteckrichtung eine so große Kraft ausgeübt wird, dass die Elastomerhülse gegen ihre Federkraft wieder so weit verpresst wird, dass der Rückdrehanschlag aus seiner Rastposition wieder zurückverdreht werden kann. Ersichtlich ist das Befestigungssystem so zu dimensionieren, dass solche Kräfte, die eine Rückdrehsicherung wieder lösen könnten, betriebsmäßig nicht auftreten.

Bevorzugt werden das Befestigungselement als Kunststoff-Spritzgussteil und die Elastomerhülse als Gummihülse ausgeführt.

Zweckmäßig kann im Bereich zwischen dem Nockenelement und der Elastomerhülse ein von der vorgespannten Elastomerhülse zum Trägerteil hin überwölbbarer Teller als Distanzteller mit geringerem Durchmesser im Vergleich zum Stützteller am Befestigungselement angebracht sein. Der Distanzteller kann dabei als Montagehilfe, insbesondere als Vormontagehalterung für eine aufgesteckte Elastomerhülse verwendet werden.

Zur Einsparung von Material und Gewicht kann zudem das Befestigungselement eine zentrale Hohlbohrung aufweisen.

Alternativ oder zusätzlich zu den vorangegangenen Ausführungsformen sind auch die folgenden Weiterbildungen von der Erfindung mit umfasst. So kann der Distanzteller des Befestigungselementes zusätzliche Konturen aufweisen, die sich elastisch nachgiebig beziehungsweise federnd auf dem plattenförmigen Trägerteil abstützen können. Darüber hinaus können die am Nockenelement ausgebildeten Nocken, mit Bezug auf den Distanzteller, mit unterschiedlichen lichten Höhen vorgesehen sein. Außerdem kann der Distanzteller Stütznocken aufweisen, die in Richtung des plattenförmigen Trägerteils vorragen. Zudem kann die Außenkontur des Befestigungselementes derart gestaltet sein, dass in der Radialrichtung ein Toleranzausgleich mit dem Formloch im Trägerteil ermöglicht ist.

Anhand einer Zeichnung wird die Erfindung weiter erläutert.

Es zeigen:
- Fig. 1: eine perspektivische Ansicht eines Ausführungsbeispiels eines montierten Befestigungssystems gemäß der Erfindung,
- Fig. 2: einen Schnitt entlang der Linie A-A aus Fig. 1,
- Fig. 3: einen Schnitt entlang der Linie B-B aus Fig. 1,
- Fig. 4: eine Seitenansicht eines Befestigungselements des Befestigungssystems nach Fig. 1,
- Fig. 5: eine vergrößerte Darstellung des unteren Nockenelements des Befestigungselements nach Fig. 4,
- Fig. 6: eine perspektivische Darstellung einer Elastomerhülse des Befestigungssystems nach Fig. 1,
- Fig. 7: eine perspektivische Ansicht eines Haltefußes nach Fig. 1 an einem zu befestigenden Bauteil,
- Fig. 8: einen runden Abschnitt eines Karosserieblechs als Trägerteil nach Fig. 1 mit einem Formloch, und
- Fig. 9: das Befestigungssystem in einer weiteren Ausführungsform.

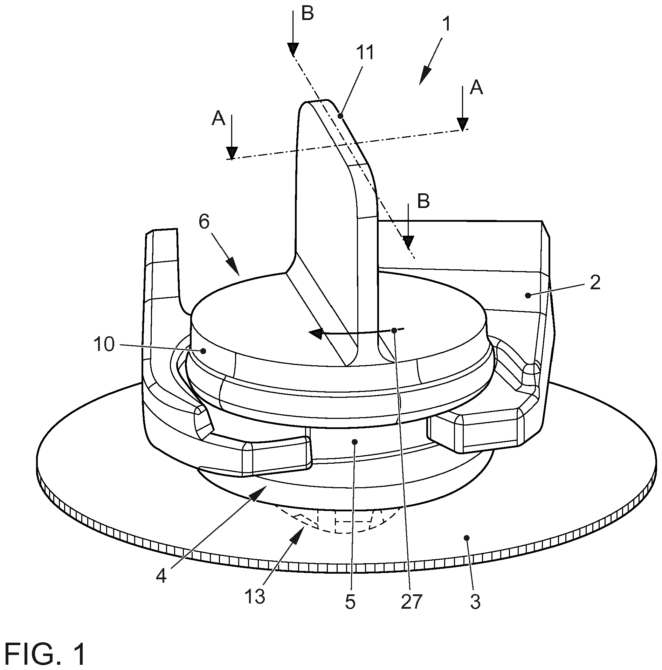

In Fig. 1 ist ein Befestigungssystem 1 für eine elastische Anbindung eines Haltefußes 2 eines (nicht weiter dargestellten) Bauteils, insbesondere eines Scheibenwischermotors an einem Karosserieblech 3 als Trägerteil dargestellt.

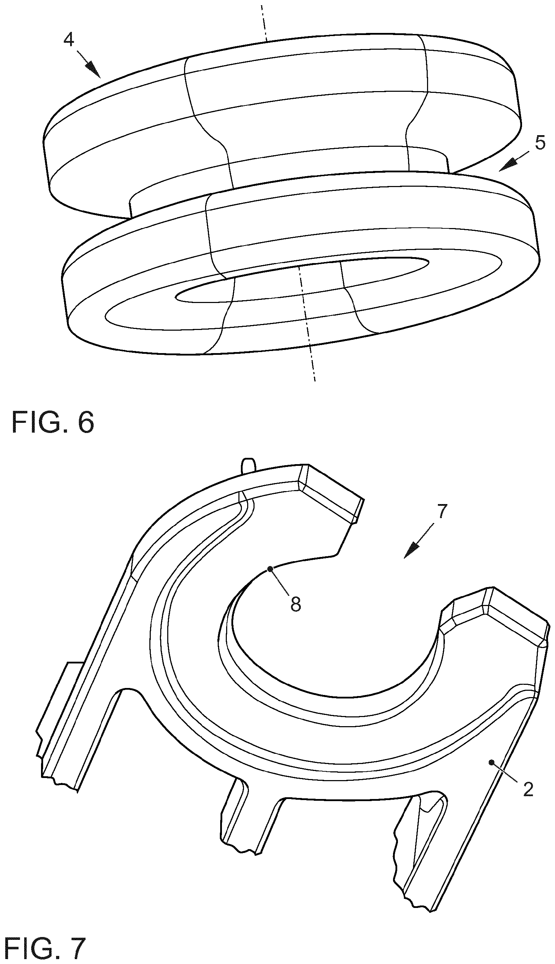

Dazu ist eine Elastomerhülse 4 mit einer außen umlaufenden Haltenut 5 verwendet. Die Elastomerhülse 4 ist mittels eines Befestigungselements 6 am Karosserieblech 3 mit einer Dreh-Rast-Verbindung axial vorgespannt gehalten. Die Elastomerhülse 4 ist perspektivisch in Fig. 6 dargestellt.

Insbesondere aus Fig. 7 ist ersichtlich, dass der Haltefuß 2 einen als Haltefuß-Steckteil 7 ausgebildeten Bereich aufweist mit einer C-förmigen, teilweise offenen und dem Innendurchmesser der Haltenut angepassten Ringform 8.

Für eine Verbindung der Elastomerhülse 4 mit dem Haltefuß 2 wird dieser in die Haltenut 5 seitlich eingesteckt. Die Materialstärke ist im Bereich des Haltesteckteils 7 im Vergleich zur Nutweite der Haltenut 5 so gewählt, dass durch die Vorspannung der Elastomerhülse 4 in axialer Richtung zusätzlich zum C-Form bedingten Formschluss über die eine Klemmverbindung hergestellt ist, wie dies insbesondere aus den Fig. 1 bis 3 ersichtlich ist.

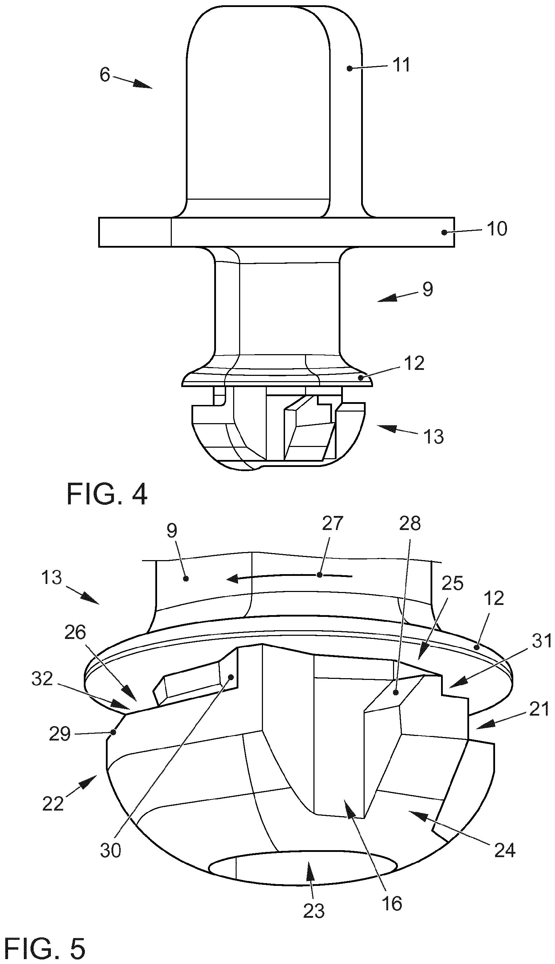

Die Befestigung und axiale Vorspannung der Elastomerhülse 4 am Karosserieblech 3 erfolgt mittels des in Fig. 4 gezeigten Befestigungselements 6. Dieses ist als Spritzgussteil hergestellt und weist einen mittleren zylindrischen Schaft 9 als Verbindungsbereich auf, auf den die Elastomerhülse 4 aufgesteckt ist. An den Schaft 9 schließt sich nach oben ein Stützteller 10 mit einem Drehgriff 11 an, wobei der Stützteller 10 von oben her auf der Elastomerhülse 4 aufliegt. Nach unten schließt sich an den Schaft 9 ein gegenüber dem Stützteller 10 schmälerer Distanzteller 12 und ein Nockenelement 13 an, welches zur besseren Verdeutlichung der Details vergrößert in Fig. 5 dargestellt ist.

Alternativ zum obigen Ausführungsbeispiel ist auch eine Montage in axialer Richtung, jedoch mit separater Elastomerhülse 4 und separaten Drehgriff 11, möglich. Zudem kann anstelle eines Spritzgussteils auch ein Druckgussteil, ein Pressformteil oder ein Warmpressteil verwendet werden.

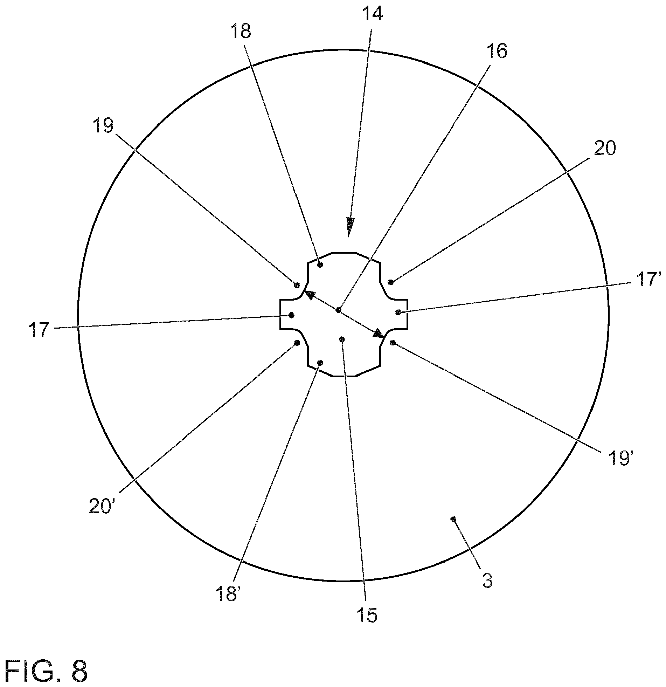

Das Nockenelement 13 greift zur Herstellung einer Dreh-Rast-Verbindung in ein gestanztes Formloch 14 am Karosseriebleich 3 ein, wie dies in Fig. 8 gezeigt ist. Das Formloch 14 weist hier einen zentralen Öffnungsbereich 15 mit einem Kerndurchmesser 16 auf, von dem vier Nockenöffnungen 17, 17' und 18, 18' seitlich abragen, wobei jeweils die beiden Nockenöffnungen 17, 17' und 18, 18' unterschiedlich gestaltet sind und jeweils spiegelbildlich gegenüberliegen. Die Nockenöffnungen sind dabei durch vier dazwischenliegende Stützlaschen 19, 19' und 20, 20' beabstandet und getrennt.

In die vier Nockenöffnungen 17, 17' und 18, 18' sind vier zugeordnete und mit einer entsprechenden Einsteckkontur gestaltete Nocken des Nockenelements 13 einsteckbar, wobei in Fig. 5 ein erster (kleinerer) der Nockenöffnung 17' zugeordneter Nocken 21 sowie ein zweiter (größerer) der Nockenöffnung 18' zugeordneter Nocken 22 gezeigt sind. Die beiden anderen, den Nocken 21, 22 spiegelbildlich gegenüberliegenden Nocken (in Fig. 5 nicht sichtbaren) sind gleich aufgebaut.

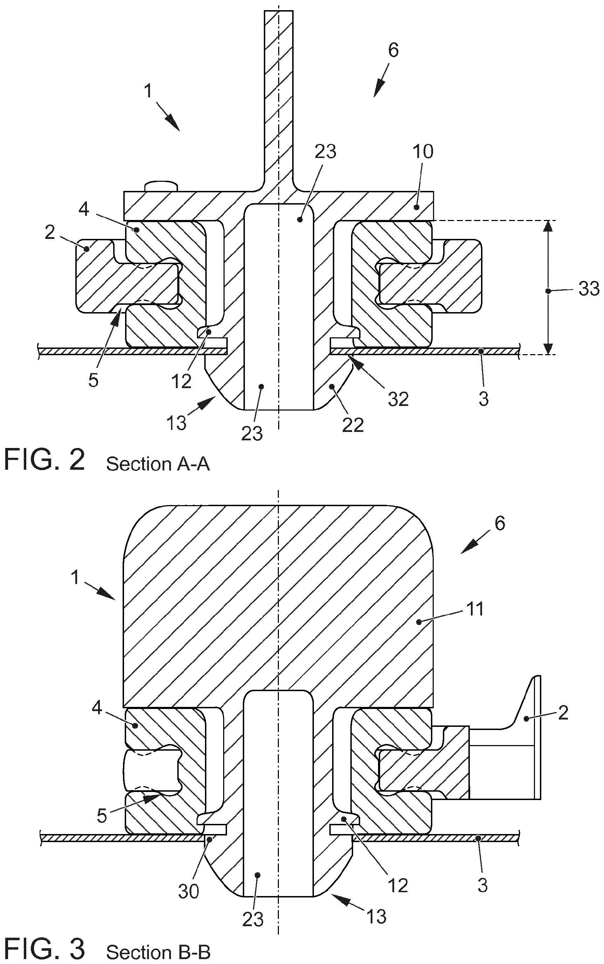

Wie insbesondere auch aus den Fig. 2 und 3 ersichtlich, weist das Befestigungselement 6 eine Hohlbohrung 23 auf, wobei der Schaft einen Außendurchmesser entsprechend dem Kerndurchmesser 16 des Formlochs 14 aufweist, der sich nach unten in den Nockenbereich fortsetzt und von dem die Nocken 21, 22 radial abragen. Am unteren Endbereich verjüngt sich das Nockenelement 13 mit Einführschrägen 24.
Zwischen dem Distanzteller 12 und den Nocken 21, 22 verläuft jeweils ein bis zum Kerndurchmesser 16 radial nach innen geführter Drehschlitz 25, 26. In Eindrehrichtung (Pfeil 27) liegt jeweils an den Nocken 21 und 22 zur Anfang der Drehschlitze 25, 26 jeweils eine Gleitschräge 28, 29. Bezogen auf die Eindrehrichtung 27 liegt am Ende des Drehschlitzes 25 ein Eindrehanschlag 30, welcher sich in der Drehendstellung am Seitenrand der Stützlasche 20' abstützt, die dann im Drehschlitz 26 aufgenommen ist. Ein Rückdrehanschlag 31 ist am Nocken 21 durch einen stufenförmigen Rücksprung ausgebildet dergestalt, dass die Stufenwange durch die axiale Federkraft der im montierten Zustand vorgespannten Elastomerhülse 4 in der Drehendstellung in die zugeordnete Nockenöffnung gezogen wird und dort am Nockenöffnungsrand anliegt. Um dies zu ermöglichen ist ersichtlich die axiale Breite des Drehschlitzes 26 größer als die des Drehschlitzes 25, welche etwa der Materialdicke des Karosserieblechs 3 entspricht. Die radiale Breite des Drehschlitzes 25 im Bereich des stufenförmigen Rücksprungs am Rückdrehanschlag 21 entspricht dabei der Breite des Drehschlitzes 26.

Der Schnitt A-A von Fig. 2 ist ersichtlich außerhalb der Anschläge 30, 31 geführt, wobei sich die Nocken 21, 22 mit ihrer Nockenoberseite 32 beziehungsweise der Unterwand der Drehschlitze 25, 26 von unten her am Karosserieblech 3 abstützen. Der Schnitt B-B nach Fig. 3 ist dagegen im Bereich der Anschläge 30, 31 geführt. Wie zudem in Fig. 2 gezeigt, ist das signifikante Maß (Pfeil 33) am Befestigungselement 6 für die Höhenabstimmung zur Verpressung der Elastomerhülse 4 die Länge zwischen der Unterseite des Stütztellers 10 und der Nockenoberseite 32 in Verbindung mit der Materialstärke des Karosserieblechs 3.

Bei der Montage des Befestigungssystems 1 wird somit das Befestigungselement 6 mit aufgesetzter Elastomerhülse 4 mit dem Nockenelement 13 durch das Formloch 14 des Karosserieblechs 13 gesteckt. Durch anschließendes Verdrehen erfolgt durch Aufgleiten auf die Gleitschrägen 28, 29 eine dauerhafte Verpressung und Erzeugung einer Vorspannung in der Elastomerhülse 4 sowie eine Verdrehsicherung. Damit ist eine Befestigung inklusive Dämpfung eines Bauteils mit dem aufgesteckten Haltefuß ermöglicht, wobei die Befestigung gegen ein selbsttätiges Lösen gesichert ist.

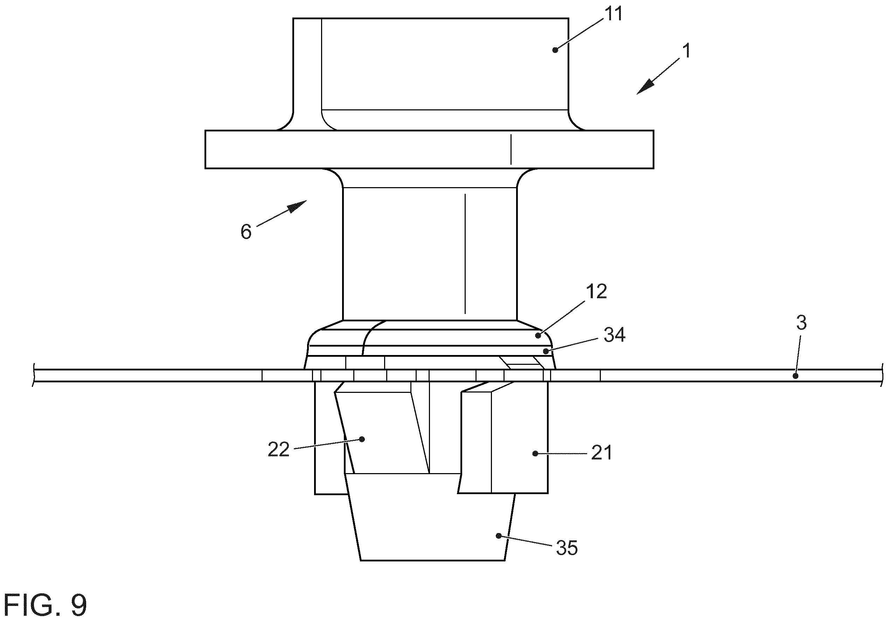

In der Fig. 9 ist ein Befestigungselement gemäß einem weiteren Ausführungsbeispiel gezeigt, dessen Aufbau und Funktionsweise grundsätzlich identisch mit dem vorangegangenen Ausführungsbeispiel ist. Von daher kann auf die Beschreibung des vorangegangenen Ausführungsbeispiels zurückgegriffen werden. Im Unterschied zum vorangegangenen Ausführungsbeispiel weist in der Fig. 9 der Distanzteller 12 zusätzliche Stütznocken 34 auf, die axial in Richtung Karosserieblech 3 vorragen. Diese dienen zur axialen Stabilisierung und verbessern den Krafteintrag. Zudem ist in der Fig. 8 das Befestigungselement 6 in Axialrichtung mit einem Einführkonus 35 verlängert. Die in der Fig. 9 dargestellten Nocken 21, 22 weisen eine unterschiedliche Höhe auf, um die Prozesssicherheit bei der Montage zu erhöhen.

## Patentansprüche

1. Anordnung umfassend ein mit einem Haltefuß (2) versehenes Bauteil sowie ein Befestigungssystem mit einem Befestigungselement (6) zur elastischen Anbindung des Bauteils an einem plattenförmigen Trägerteil (3),
wobei das Befestigungselement (6) einen mittleren Verbindungsbereich als Schaft (9) aufweist, an den sich einerseits ein Stützteller (10) mit einem Drehgriff (11) oder Werkzeugansatz und andererseits ein Nockenelement (13) anschließt und den Verbindungsbereich (9) eine Elastomerhülse (4) umgibt, die eine außen zumindest teilweise umlaufende Haltenut (5) aufweist, in die der Haltefuß (2) eingreift,
und wobei im montierten Zustand das Nockenelement (13) durch ein Formloch (14) im Trägerteil (3) gesteckt ist, dergestalt, dass das Befestigungselement (6) für eine Rastverbindung verdreht ist und die Elastomerhülse (4) zwischen dem Stützteller (10) und dem Trägerteil (3) zusammengepresst und damit elastisch vorgespannt ist, und wobei am Nockenelement (13) wenigstens ein Nocken (21, 22) zur Herstellung einer formschlüssigen Durchsteckverbindung nach einer Verdrehung mit einem das Formloch (14) umgebenden Trägerwandbereich ausgebildet ist,
**dadurch gekennzeichnet,**
**dass** der in die Haltenut (5) der Elastomerhülse (4) eingreifende Bereich des Haltefußes (2) als Haltefuß-Steckteil (7) ausgebildet ist mit einer C-förmig teilweise offenen, dem Innendurchmesser der Haltenut (5) angepassten Ringform (8), und dass zudem am Nockenelement (13) eine Rastkontur mit wenigstens einer Gleitschräge (28, 29) ausgebildet ist, dergestalt dass bei einer Verdrehung das Nockenelement (13) durch schräges Aufgleiten weiter in das Formloch (14) hineingezogen wird und damit durch eine Längenverkürzung zwischen dem Stützteller (10) und dem Trägerteil (3) eine Vorspannung in der dortigen Elastomerhülse (4) senkrecht zum Trägerteil (3) aufgebaut wird.

2. Anordnung nach Anspruch 1, **dadurch gekennzeichnet, dass** die Nutweite der Haltenut (5) und die in die Haltenut (5) eingreifende Materialstärke des Haltefuß-Steckteils (7) so aufeinander abgestimmt sind, dass im montierten Zustand bei elastisch vorgespannter Elastomerhülse (4) das Haltefuß-Steckteil (7) elastisch eingespannt in der Haltenut (5) aufgenommen und gehalten ist.

3. Anordnung nach Anspruch 1 oder Anspruch 2, **dadurch gekennzeichnet,**
**dass** die Rastkontur wenigstens einen Drehanschlag (30, 31) aufweist, der in der Verdrehendstellung nach Überwindung der Gleitschräge (28, 29) für eine rotationssichere Verrastung im Formloch (14) eingreift.

4. Anordnung nach einem der vorhergehenden Ansprüche, **dadurch gekennzeichnet, dass** die Rastkontur sowohl einen Eindrehanschlag (30) als auch einen Rückdrehanschlag (31) aufweist, und
dass der Rückdrehanschlag (31) durch einen Rücksprung am Ende der Gleitschräge (28) gebildet ist und in seiner Anschlagposition durch die axiale Federkraft der vorgespannten Elastomerhülse (4) gehalten ist.

5. Anordnung nach Anspruch 4, **dadurch gekennzeichnet,**
**dass** das Formloch (14) am Trägerteil (3) einen zentralen Öffnungsbereich (15) mit einem Kerndurchmesser (14) aufweist, von dem vier Nockenöffnungen (17, 17', 18, 18') seitlich abragen, wobei von den vier Nockenöffnungen (17, 17', 18, 18') jeweils zwei spiegelbildlich gegenüberliegen und durch vier dazwischen liegenden Stützlaschen (19, 19', 20, 20') getrennt sind, und
**dass** durch die vier Nockenöffnungen (17, 17', 18, 18') zugeordnete entsprechend gestaltete Nocken (21, 22) des Nockenelements (13) durchsteckbar sind, an deren Oberseite (32) ein sich radial nach innen erstreckender Drehschlitz (25, 26) verläuft, der nach einer Verdrehung des Befestigungselements (6) einen Trägerwandbereich einschließt und im Bereich der Stützlaschen (19, 19', 20, 20') liegt, so dass diese zur Abstützung gegen ein Abheben des Befestigungselements (16) von den Nocken (21, 22) hintergriffen werden.

6. Anordnung nach Anspruch 5, **dadurch gekennzeichnet,**
**dass** in Drehrichtung (27) ein Drehschlitz (25, 26) jeweils eine ansteigende Gleitschräge (28, 29) zur Erzeugung der Vorspannung in der Elastomerhülse (4) aufweist und ein Drehschlitz (6) in Drehrichtung durch einen Drehanschlag (30) begrenzt ist, der sich in der Drehendstellung seitlich an einem Nockenöffnungsrand abstützt, und
**dass** ein Drehschlitz (25) in Drehrichtung (27) durch einen Rückdrehanschlag (31) begrenzt ist, der durch einen stufenförmigen in Einsteckrichtung ausgebildeten Rücksprung gebildet ist, dergestalt dass die Stufenwange durch die Federkraft der vorgespannten Elastomerhülse (4) in der Drehendstellung in eine Nockenöffnung gezogen wird und seitlich zur Rückdrehabstützung am Nockenöffnungsrand anliegt.

7. Anordnung nach einem der Ansprüche 1 bis 6, **dadurch gekennzeichnet, dass** das Befestigungselement (6) ein Kunststoff-Spritzgussteil ist und die Elastomerhülse (4) eine Gummihülse ist.

8. Anordnung nach einem der Ansprüche 1 bis 7, **dadurch gekennzeichnet, dass** im Bereich über dem Nockenelement (13) ein Distanzteller (12) angebracht ist, der von der vorgespannten Elastomerhülse (4) seitlich überwölbbar ist.

9. Anordnung nach einem der Ansprüche 1 bis 8, **dadurch gekennzeichnet, dass** das Befestigungselement (6) eine zentrale Hohlbohrung (23) aufweist.

## Claims

1. Arrangement comprising a component, which is provided with a retaining foot (2), and a fastening system having a fastening element (6) for elastically connecting the component to a panel-like carrier part (3),
wherein the fastening element (6) has a middle connecting region in the form of a shaft (9), which is adjoined on one side by a support plate (10) with a rotary handle (11) or tool attachment and on the other side by a cam element (13), and the connecting region (9) is surrounded by an elastomeric sleeve (4) which has a retaining groove (5) which runs around at least partially on the outside and in which the retaining foot (2) engages,
and wherein, in the assembled state, the cam element (13) is plugged through a shaped hole (14) in the carrier part (3) in such a way that the fastening element (6) is rotated to give a latching connection, and the elastomeric sleeve (4) is compressed between the support plate (10) and the carrier part (3) and thus is elastically preloaded, and wherein, on the cam element (13), there is configured at least one cam (21, 22) which, after rotation, is intended to produce a form-fitting plug-through connection with a carrier wall region which surrounds the shaped hole (14),
**characterized**
**in that** that region of the retaining foot (2) which engages in the retaining groove (5) of the elastomeric sleeve (4) is configured in the form of a retaining foot plug-in part (7) having a C-shaped, partially open ring shape (8) which is adapted to the inner diameter of the retaining groove (5), and in that, also on the cam element (13), a latching contour having at least one sliding bevel (28, 29) is configured in such a way that, during rotation, the cam element (13) is drawn further into the shaped hole (14) as a result of an oblique sliding action, and thus by shortening the length between the support plate (10) and the carrier part (3), a preload in the elastomeric sleeve (4) there is built up perpendicularly with respect to the carrier part (3).

2. Arrangement according to Claim 1, **characterized in that** the groove width of the retaining groove (5) and that material thickness of the retaining foot plug-in part (7) which engages in the retaining groove (5) are matched to one another in such a way that, in the assembled state, with elastically preloaded elastomeric sleeve (4), the retaining foot plug-in part (7) is accommodated and retained in the retaining groove (5) in an elastically clamped manner.

3. Arrangement according to Claim 1 or Claim 2, **characterized in that** the latching contour has at least one rotary stop (30, 31) which, in the rotational end position, after the sliding bevels (28, 29) have been surmounted, engages in the shaped hole (14) to give a rotationally secure latching action.

4. Arrangement according to one of the preceding claims, **characterized in that** the latching contour has both a rotation stop (30) and a reverse-rotation stop (31), and
**in that** the reverse-rotation stop (31) is formed by a recessed portion at the end of the sliding bevel (28) and is retained in its stop position by the axial spring force of the preloaded elastomeric sleeve (4).

5. Arrangement according to Claim 4, **characterized in that** the shaped hole (14) on the carrier part (3) has a central opening region (15) with a core diameter (14), from which four cam openings (17, 17', 18, 18') laterally project, wherein in each case two of the four cam openings (17, 17', 18, 18') lie opposite each another in a mirror-inverted manner, and are separated by four support tabs (19, 19', 20, 20') which lie therebetween, and
**in that** associated, correspondingly designed cams (21, 22) of the cam element (13) can be plugged through the four cam openings (17, 17', 18, 18'), a radially inwardly extending rotary slot (25, 26) running along the upper side (32) of said cams, said slot, after the fastening element (6) has been rotated, enclosing a carrier wall region and lying in the region of the support tabs (19, 19', 20, 20'), such that the latter are engaged behind by the cams (21, 22) in order to brace the fastening element (16) against being lifted off.

6. Arrangement according to Claim 5, **characterized in that**, in the direction of rotation (27), a rotary slot (25, 26) in each case has a rising sliding bevel (28, 29) for generating the preload in the elastomeric sleeve (4), and a rotary slot (6) is delimited in the direction of rotation by a rotary stop (30) which, in the rotational end position, is laterally supported on a cam opening edge, and
**in that** a rotary slot (25) is delimited in the direction of rotation (27) by a reverse-rotation stop (31) which is formed by a step-like recessed portion, which is configured in the plug-in direction, in such a way that the step cheek is drawn into a cam opening by the spring force of the preloaded elastomeric sleeve (4) in the rotational end position and laterally bears against the cam opening edge in order to be braced against reverse rotation.

7. Arrangement according to one of Claims 1 to 6, **characterized in that** the fastening element (6) is a plastics injection-moulded part and the elastomeric sleeve (4) is a rubber sleeve.

8. Arrangement according to one of Claims 1 to 7, **characterized in that**, in the region above the cam element (13), there is mounted a spacer plate (12) which can be laterally overarched by the preloaded elastomeric sleeve (4).

9. Arrangement according to one of Claims 1 to 8, **characterized in that** the fastening element (6) has a central hollow bore (23).

## Revendications

1. Agencement, comprenant une pièce munie d'un pied de retenue (2) ainsi qu'un système de fixation muni d'un élément de fixation (6) pour attacher de manière élastique la pièce à une pièce support en forme de plaque (3),
dans lequel l'élément de fixation (6) présente une zone de jonction centrale sous forme de tige (9) suivie d'un disque d'appui (10) muni d'un bouton tournant (11) ou d'un embout d'outil d'une part, et d'un élément à cames (13) d'autre part, et la zone de jonction (9) est entourée d'une enveloppe élastomère (4) qui présente une rainure de retenue (5) au moins partiellement périphérique à l'extérieur dans laquelle s'engage le pied de retenue (2), et dans lequel, à l'état monté, l'élément à cames (13) est inséré à travers un trou façonné (14) dans la pièce support (3) de telle sorte que l'élément de fixation (6) est tordu pour une liaison par encliquetage et l'enveloppe élastomère (4) est comprimée entre le disque d'appui (10) et la pièce support (3) et donc sous précontrainte élastique, et dans lequel, sur l'élément à cames (13), au moins une came (21, 22) est réalisée pour établir, après torsion, une liaison traversante par complémentarité de forme avec une zone de paroi support entourant le trou façonné (14),
**caractérisé en ce que** la zone du pied de retenue (2) s'engageant dans la rainure de retenue (5) de l'enveloppe élastomère (4) est réalisée sous forme de partie enfichable de pied de retenue (7) ayant une forme annulaire (8) en forme de C partiellement ouverte et adaptée au diamètre intérieur de la rainure de retenue (5), et **en ce que** de plus, sur l'élément à cames (13), un contour d'encliquetage avec au moins une pente de coulissement (28, 29) est réalisé de telle sorte qu'en cas de torsion, l'élément à cames (13) est attiré plus loin dans le trou façonné (14) par un coulissement oblique vers le haut, et de ce fait, un raccourcissement longitudinal entre le disque d'appui (10) et la pièce support (3) crée une précontrainte dans l'enveloppe élastomère (4) située à cet endroit, perpendiculairement à la pièce support (3).

2. Agencement selon la revendication 1, **caractérisé en ce que** l'ampleur de rainure de la rainure de retenue (5) et l'épaisseur de matériau de la partie enfichable de pied de retenue (7) s'engageant dans la rainure de retenue (5) sont adaptées l'une à l'autre de telle sorte qu'à l'état monté, lorsque l'enveloppe élastomère (4) est sous précontrainte élastique, la partie enfichable de pied de retenue (7) est reçue et retenue dans la rainure de retenue (5) sous serrage élastique.

3. Agencement selon la revendication 1 ou 2, **caractérisé en ce que** le contour d'encliquetage présente au moins une butée de rotation (30, 31) qui s'engage dans la position finale de torsion, après avoir passé la pente de coulissement (28, 29), pour un encliquetage verrouillé en rotation dans le trou façonné (14).

4. Agencement selon l'une quelconque des revendications précédentes, **caractérisé en ce que** le contour d'encliquetage présente aussi bien une butée de serrage (30) qu'une butée de desserrage (31), et
**en ce que** la butée de desserrage (31) est formée par un retrait au bout de la pente de coulissement (28) et est retenue dans sa position en butée par la tension de ressort axiale de l'enveloppe élastomère (4) sous précontrainte.

5. Agencement selon la revendication 4, **caractérisé**
**en ce que** le trou façonné (14) présente sur la pièce support (3) une zone d'ouverture centrale (15) ayant un diamètre de noyau (14) à partir duquel quatre ouvertures à cames (17, 17', 18, 18') font saillie latéralement, dans lequel, parmi les quatre ouvertures à cames (17, 17', 18, 18'), respectivement deux sont opposées de manière symétrique et sont séparées par quatre pattes d'appui intermédiaires (19, 19', 20, 20'), et
**en ce qu'**il est possible de faire passer à travers les quatre ouvertures à cames (17, 17', 18, 18') des cames associées (21, 22) de forme correspondante de l'élément à cames (13), sur la face supérieure (32) desquelles se trouve une fente de rotation (25, 26) s'étendant radialement vers l'intérieur qui enferme une zone de paroi support après une torsion de l'élément de fixation (6) et se situe dans la zone des pattes d'appui (19, 19', 20, 20') de sorte que celles-ci sont saisies par l'arrière afin de fournir un soutien contre tout enlèvement de l'élément de fixation (16) des cames (21, 22).

6. Agencement selon la revendication 5, **caractérisé**
**en ce que** dans la direction de rotation (27), une fente de rotation (25, 26) présente respectivement une pente de coulissement montante (28, 29) pour générer la précontrainte dans l'enveloppe élastomère (4), et une fente de rotation (6) est limitée dans la direction de rotation par une butée de rotation (30) prenant appui dans la position finale de rotation latéralement sur un bord d'ouverture de came, et
**en ce qu'**une fente de rotation (25) est limitée dans la direction de rotation (27) par une butée de desserrage (31) qui est formée par un retrait en forme de gradin, réalisé dans la direction d'insertion, de telle sorte que la face de gradin est attirée par la tension de ressort de l'enveloppe élastomère (4) sous précontrainte dans la position finale de rotation dans une ouverture de came et est adjacente latéralement au bord d'ouverture à came pour un soutien de desserrage.

7. Agencement selon l'une quelconque des revendications 1 à 6, **caractérisé en ce que** l'élément de fixation (6) est une pièce plastique moulée par injection et l'enveloppe élastomère (4) est une enveloppe en caoutchouc.

8. Agencement selon l'une quelconque des revendications 1 à 7, **caractérisé en ce que** dans la zone au-dessus de l'élément à cames (13) est monté un disque d'écartement (12) au-dessus duquel l'enveloppe élastomère (4) sous précontrainte peut être bombée latéralement.

9. Agencement selon l'une quelconque des revendications 1 à 8, **caractérisé en ce que** l'élément de fixation (6) présente un alésage creux central (23).
